# EUROPÄISCHE PATENTANMELDUNG

(11) **EP 1 225 511 A1**
(43) Veröffentlichungstag der Anmeldung: **24.07.2002**
(21) Anmeldenummer: 00919160.2
(22) Anmeldetag: 24.04.2000
(51) Int. Cl.: G06F 12/00

(54) **VERFAHREN UND SYSTEM ZUR AKTEN-VERWALTUNG IN VERTEILTEN UMGEBUNGEN**

(30) Priorität: 22.04.1999 JP 11440499
(71) Anmelder: Cai Co., Ltd., Tokyo 111-0042 (JP)
(72) Erfinder: RYU, Tadamitsu, Taito-ku Tokyo 111-0031 (JP)
(74) Vertreter: Lorenz, Werner, Dr.-Ing.
(86) Internationale Anmeldenummer: JP0002664
(87) Internationale Veröffentlichungsnummer: WO0065449

(57) **Zusammenfassung**

Bei dem Dateiverwaltungssystem in verteilter Umgebung, ist jede Datenstation mit Dateicontrollern 105, 200 ausgerüstet, die die darin gespeicherten Dateien verwalten und den Informationsaustausch mit dem Netzwerk kontrollieren.

Der Dateicontroller 200 umfaßt folgendes:
(1) Ein Meta-Index-Speicherteil 202 zur Registrierung eines Meta-Index mit Speicherplatzinformationen über ein Original und dessen kopierte Datei(en), wovon jede die Information speichert,
(2) Ein Informationsübertragungsmittel 210 für den Fall, in dem eine Zugriffsanforderung auf eine Information von einem Benutzer unter Bezugnahme auf den Meta-Index erfolgt, und
   (a) wenn die Datei, in der die Informationen gespeichert sind, in der einen Datenstation vorhanden ist, Öffnen der Datei,
   (b) wenn die Datei nicht vorhanden ist, Kopieren der Datei einer anderen Datenstation auf die eine Datenstation, Schreiben von Speicherplatzinformationen der betroffenen Datenstationen und Öffnen der kopierten Datei usw. und Übertragung der Information der geöffneten Datei an den Benutzer, und
(3) Synchronisationsmittel 204 zur Bezugnahme auf den Meta-Index und synchronisierende Aktualisierung der Datei in allen anderen betroffenen Datenstationen, deren Speicherplatz/plätze aufgezeichnet ist/sind.

Das Problem der Konzentration der Last auf eine spezifische Datenstation, das Problem der synchronen Dateiaktualisierung und das Problem der Kostenerhöhung kann umgangen werden.

## Beschreibung

### Technischer Bereich

Diese Erfindung betrifft ein Verfahren und System zur Dateiverwaltung in verteilter Umgebung, wobei eine Mehrzahl von Datenstationen jeweils mittels eines Netzwerkes verbunden ist und Informationen jeweils in dem Speicher einiger verteilter Datenstationen aufgezeichnet sind, insbesondere solche, bei denen ein Benutzer eine Datei nutzen kann, die in einer Mehrzahl von mittels eines Netzwerkes verbundenen Datenstationen gespeichert und kontrolliert war (Informationsverarbeiter), ohne dieser verteilten Umgebung Aufmerksamkeit widmen zu müssen.

### Hintergrund der Erfindung

Herkömmlicherweise handelt es sich bei dem Dateiverwaltungssystem in der verteilten Umgebung um eines, bei dem Datenstationen, die geographisch verteilt wurden und logischerweise durch ein Netzwerk und Dateien unter Kontrolle verbunden sind und von einem Benutzer so verwendet werden können, als wenn er oder sie auf seine oder ihre eigene Datenstation zugreifen würde. Die Verwaltung gemeinsamer Dateien zwischen Mehrfachunternehmen oder die geographisch verteilten Dateien können integriert werden, und es wird eine Verbesserung des Datenzugriffs und die Verteilung von Schäden auf die Störungen erreicht.

Es besteht jedoch das Problem der Vermehrung der gespeicherten Datei, das Problem des Lastausgleichs, um Zugriffe nicht auf eine bestimmte Datenstation zu konzentrieren und das Problem der synchronen Dateiaktualisierung.

Normalerweise wird bei dem Dateiverwaltungssystem in der verteilten Umgebung ein Index erstellt, und wenn der Benutzer auf die spezifische Datei zugreift, erfährt er oder sie durch Bezugnahme auf den Index den Speicherplatz der Datei. Das Verwaltungssystem kann auf unterschiedliche Arten in Abhängigkeit davon in Kategorien unterteilt werden, wie der Index im System angeordnet ist und verwaltet wird. Es gibt 4 Arten: ein zentrales Verwaltungssystem, bei dem eine spezifische Datenstation den Index konzentrisch speichert, ein vollständiges Vermehrungssystem, bei dem alle Datenstationen den Index speichern, ein Nicht-Vermehrungssystem, bei dem jede Datenstation nur dann ihren eigenen Index aufweist wenn sie von keiner anderen Datenstation einen Index enthält, und ein teilweises Vermehrungssystem, bei dem einige Mehrfachdatenstationen den Index speichern.

Bei dem zentralen Verwaltungssystem gibt es in Bezug darauf Probleme, daß die Konzentration auf die spezifische Datenstation erfolgt, die den Index aufweist, so daß die Störungen aufgrund der Störung in dieser Datenstation auf alle Datenstationen übergreifen, und in bezug darauf, daß alle Startpunkte der Zugriffe auf dieser spezifischen Datenstation liegen, wodurch die Bearbeitungszeit erhöht wird.

Bei dem vollständigen Vermehrungssystem besteht kein Problem bei dem zentralen Verwaltungssystem. Es sind jedoch in bezug darauf Probleme vorhanden, daß es notwendig ist, den Index aller Datenstationen zu aktualisieren, wenn es beim Index eine Veränderung gibt, wodurch zu diesem Zeitpunkt die Last des gesamten Systems konzentriert wird, und in bezug darauf, daß der Betrag des Index des gesamten Systems größer wird, da alle Datenstationen den Index aller Datenstationen aufrechterhalten.

Bei dem Nicht-Vermehrungssystem besteht nicht das Problem, daß das gesamte System aufgrund von Störungen der spezifischen Datenstation angehalten wird, und es muß nur den Index der eigenen Datenstation verändern, wenn es eine Veränderung beim Index gibt. Es besteht jedoch das Problem, daß die Last einer Anfrage an alle anderen Datenstationen dann auftritt, wenn der Benutzer auf die von der Datenstation verwaltete Datei über eine andere Datenstation als ihre eigene Datenstation zugreift.

Bei dem teilweisen Vermehrungssystem versucht dieses, die Probleme mit den Kompromißbeziehungen zu lösen, die die oben erwähnten drei Systeme besitzen, indem sie sie ausgleichen. Die Konstruktion des Systems ist jedoch sehr schwierig.

Die Aufgabe der vorliegenden Erfindung besteht darin, ein Dateiverwaltungsverfahren und ein Dateiverwaltungssystem bereitzustellen, die Probleme von herkömmlichen Systemen, wie z.B. die Lastkonzentration auf der oben erwähnten spezifischen Datenstation, die synchrone Dateiaktualisierung und den Zugriff auf eine andere Datenstation, überwinden können.

### Offenbarung der Erfindung

Damit diese Erfindung den oben erwähnten Zweck erzielt, wird ein Dateiverwaltungsverfahren in verteilter Umgebung bereitgestellt, von Dateiverwaltungsverfahren in verteilter Umgebung, wobei eine Mehrzahl von sowohl als Server als auch als Benutzer dienenden Datenstationen jeweils mittels eines Netzwerkes verbunden ist und Informationen jeweils in dem Speicher einiger verteilter Datenstationen aufgezeichnet sind, wobei das Verfahren folgende Schritte umfaßt:
1) Einrichtung eines Dateicontrollers in der einzelnen Datenstation, der Dateien der eigenen Datenstation verwaltet und den Informationsaustausch mit dem Netzwerk kontrolliert,
2) Erzeugung eines Meta-Index zur Erkennung einer Information in bezug auf die Informationen innerhalb des Netzwerkes und Registrierung von Speicherplatzinformationen eines Originals und seiner kopierten Datei(en), wovon jede die Information in einem Meta-Index-Speicherteil des Dateicontrollers in jeder Datenstation speichert, in dem die Information aufgezeichnet ist, und Bereitstellung einer Tabelle, die die bei jedem Speicherplatz in dem Meta-Index-Speicherteil registrierte Zugriffshäufigkeit zählt, um die Anzahl von Zugriffen auf die Datei immer aufzuzeichnen, wenn der Zugriff auf den Meta-Index erfolgt,
3) Kopieren, Übertragen oder Löschen der Datei in Abhängigkeit von dem Lastausgleich zwischen den Datenstationen, wenn notwendig,
4) in dem Fall, in dem eine Zugriffsanforderung auf eine Information von einer Datenstation von einem Benutzer über das Netzwerk unter Bezugnahme auf den Meta-Index in dem Meta-Index-Speicherteil des Dateicontrollers in der einen Datenstation gestellt wird, und
   (i) wenn die Datei, in der die Informationen gespeichert sind, in der einen Datenstation vorhanden ist, Öffnen der Datei in der Datenstation,
   (ii) wenn die Datei, in der die Informationen gespeichert sind, nicht in der einen Datenstation vorhanden ist, in Abhängigkeit von der Anzahl von in der Tabelle gespeicherten Zugriffen, die diese zählt,
      a) Kopieren der Datei einer anderen Datenstation auf die eine Datenstation, Schreiben von Speicherplatzinformationen in den Meta-Index des Dateicontrollers in der einen Datenstation und in eine andere betroffene Datenstation/andere betroffene Datenstationen, und Öffnen der kopierten Datei,
      b) Öffnen der Datei in einer anderen Datenstation und Übertragen der Informationen der geöffneten Datei an den Benutzer der einen Datenstation über das Netzwerk, oder
      c) Übertragen der Datei einer anderen Datenstation zu der einen Datenstation, Neuschreibung der Speicherplatzinformationen des Meta-Index und Öffnen der übertragenen Datei, und,
5) in dem Fall, in dem eine Veränderung in der Datei in einer Datenstation aufgezeichnet ist, Bezugnahme auf den in dem Meta-Index-Speicherteil der einen Datenstation aufgezeichneten Meta-Index und synchronisierende Aktualisierung der Datei in der anderen Datenstation/allen anderen Datenstationen, deren Speicherplatz/plätze aufgezeichnet ist/sind.

Die in Anspruch 2 dargelegte Erfindung betrifft ein Dateiverwaltungsverfahren nach Anspruch 1, dadurch gekennzeichnet, daß die Speicherplatzinformationen aus einem Datenstationsschlüssel bestehen, der die Datenstation spezifiziert, die die Datei speichert sowie eine Adresse, an der die von dem Dateicontroller in der Datenstation kontrollierte Position in dem Speicher spezifiziert wird.

Die in Anspruch 3 dargelegte Erfindung betrifft ein Dateiverwaltungsverfahren nach Anspruch 1, dadurch gekennzeichnet, daß es weiterhin folgende Schritte umfaßt, wobei der Benutzer der einen Datenstation eine Mehrzahl der getrennt in dem Speicher der eigenen Datenstation gespeicherten Dateien gleichzeitig nutzen will,
1) Herstellung einer Zwischenspeicherdatei in einem neuen Bereich in dem Speicher der eigenen Datenstation durch kontinuierliches Kopieren der Dateien mit Registrierung von Speicherplatzinformationen der Zwischenspeicherdatei in dem Meta-Index einer jeden Datei,
2) Bezugnahme auf den Meta-Index und Öffnen der Zwischenspeicherdatei, wenn danach eine Zugriffsanforderung auf eine der Dateien durch den Benutzer der einen Datenstation gestellt wird.

Als Ergebnis wird die Häufigkeit des Speicherzugriffs in der eigenen Datenstation zwecks Verringerung der Last verringert.

Die in Anspruch 4 dargelegte Erfindung betrifft ein Dateiverwaltungsverfahren nach Anspruch 1, dadurch gekennzeichnet, daß es weiterhin folgende Schritte umfaßt:
Bereitstellung des Dateicontrollers mit einer Liste, die die Bezugsberechtigung für jede Datenstation beschreibt, und
in dem Fall, in dem die Datei auf eine Datenstation kopiert wird, die keine Bezugsberechtigung entsprechend der Notwendigkeit in bezug auf den Lastausgleich aufweist, Einstellung der Datenstation in einen Zustand, in dem die kopierte Datei auf der Datenstation nicht geöffnet werden kann.

Die in Anspruch 5 dargelegte Erfindung betrifft ein Dateiverwaltungsverfahren nach Anspruch 1, dadurch gekennzeichnet, daß die Datei mindestens eine aus einer aus Datendateien und Programmdateien bestehenden Gruppe ausgewählte Datei umfaßt.

Die in Anspruch 6 dargelegte Erfindung betrifft ein Dateiverwaltungsverfahren nach Anspruch 1, dadurch gekennzeichnet, daß es bei Auftreten von Störungen in einer beliebigen der durch das Netzwerk verbundenen Datenstationen weiterhin die folgenden Schritte umfaßt:
Bezugnahme auf den Meta-Index und,
Übertragen der Informationen der geöffneten Datei an den Benutzer der einen Datenstation über das Netzwerk, oder,
   c) Übertragen der Datei einer anderen Datenstation zu der einen Datenstation, Neuschreibung der Speicherplatzinformationen des Meta-Index und Öffnen der übertragenen Datei, und,
Kopieren der in der gestörten Datenstation gespeicherten Informationsdatei von einer anderen Datenstation ohne Störung, wodurch eine Backup-Verarbeitung durchgeführt wird.

Als Ergebnis wird die Sicherheit des Systems selbst dann aufrechterhalten, wenn in der Datenstation eine Kopie ohne Bezugsberechtigung für den Lastausgleich vorhanden ist.

Der zweite Aspekt der vorliegenden Erfindung betrifft ein Dateiverwaltungssystem in verteilter Umgebung, wobei eine Mehrzahl von sowohl als Server als auch als Benutzer dienenden Datenstationen jeweils mittels eines Netzwerkes verbunden ist und Informationen jeweils in dem Speicher einiger verteilter Datenstationen aufgezeichnet sind, wobei jede Datenstation einen Dateicontroller aufweist, der Dateien der eigenen Datenstation verwaltet und den Informationsaustausch mit dem Netzwerk kontrolliert, und in der einzelnen Datenstation eingerichtet wird, wobei der Dateicontroller folgendes umfaßt:
1) Ein Meta-Index-Speicherteil zur Registrierung eines Meta-Index zur Erkennung einer Information in bezug auf Informationen innerhalb des Netzwerkes und zur Registrierung von Speicherplatzinformationen eines Originals und seiner kopierten Datei(en), wovon jede die Information speichert,
2) Eine Häufigkeitstabelle , die die Zugriffshäufigkeit auf einen in dem jeweiligen Meta-Index-Speicherteil registrierten Speicherplatz zählt,
3) Ein Dateikontrollmittel zum Kopieren, Übertragen oder Löschen der Datei in Abhängigkeit von dem Lastausgleich zwischen den Datenstationen, wenn notwendig,
4) Ein Informationsübertragungsmittel für den Fall, in dem eine Zugriffsanforderung auf eine Information von einer Datenstation von einem Benutzer über das Netzwerk unter Bezugnahme auf den Meta-Index in dem Meta-Index-Speicherteil des Dateicontrollers in der einen Datenstation gestellt wird, und
   (i) wenn die Datei, in der die Informationen gespeichert sind, in der einen Datenstation vorhanden ist, Öffnen der Datei in der Datenstation,
   (ii) wenn die Datei, in der die Informationen gespeichert sind, nicht in der einen Datenstation vorhanden ist,
      a) Kopieren der Datei einer anderen Datenstation auf die eine Datenstation, Schreiben von Speicherplatzinformationen in den Meta-Index des Dateicontrollers in der einen Datenstation und in eine andere betroffene Datenstation/andere betroffene Datenstationen, und Öffnen der kopierten Datei,
      b) Öffnen der Datei in einer anderen Datenstation und
5) Synchronisationsmittel zur Bezugnahme auf den in dem Meta-Index-Speicherteil der einen Datenstation aufgezeichneten Meta-Index und synchronisierende Aktualisierung der Datei in der anderen Datenstation/allen anderen Datenstationen, deren Speicherplatz/plätze aufgezeichnet ist/sind, in dem Fall, in dem eine Veränderung in der Datei in einer Datenstation aufgezeichnet ist.

Die in Anspruch 8 dargelegte Erfindung betrifft ein Dateiverwaltungssystem nach Anspruch 7, dadurch gekennzeichnet, daß es weiterhin folgendes umfaßt:
Ein Gruppeneinrichtungsmittel zum Einrichten einer Gruppe um zu veranlassen, daß die zu der Gruppe gehörenden Datenstationen den Meta-Index gemeinsam besitzen.

Die in Anspruch 9 dargelegte Erfindung betrifft ein Dateiverwaltungssystem nach Anspruch 7, dadurch gekennzeichnet, daß die Speicherplatzinformationen aus einem Datenstationsschlüssel bestehen, der die Datenstation spezifiziert, die die Datei speichert sowie eine Adresse, an der die von dem Dateicontroller in der Datenstation kontrollierte Position in dem Speicher spezifiziert wird.

Die in Anspruch 10 dargelegte Erfindung betrifft ein Dateiverwaltungssystem nach Anspruch 7, dadurch gekennzeichnet, daß es weiterhin folgendes umfaßt:
Beschleunigungsmittel, wenn der Benutzer der einen Datenstation eine Mehrzahl der getrennt in dem Speicher seiner Datenstation gespeicherten Dateien gleichzeitig nutzen will,
   1) Herstellung einer Zwischenspeicherdatei in einem neuen Bereich in dem Speicher der eigenen Datenstation durch kontinuierliches Kopieren der Dateien mit Registrierung von Speicherplatzinformationen der Zwischenspeicherdatei in dem Meta-Index einer jeden Datei, und
   2) Bezugnahme auf den Meta-Index und Öffnen der Zwischenspeicherdatei, wenn danach eine Zugriffsanforderung auf eine der Dateien durch den Benutzer der einen Datenstation gestellt wird.

Die in Anspruch 11 dargelegte Erfindung betrifft ein Dateiverwaltungssystem nach Anspruch 7, dadurch gekennzeichnet, daß der Dateicontroller weiterhin folgendes umfaßt:
Eine Liste, die die Bezugsberechtigung für jede Datenstation beschreibt, und
das Ausgleichsmittel in dem Fall, in dem die Datei auf eine Datenstation kopiert wird, die keine Bezugsberechtigung entsprechend der Notwendigkeit in bezug auf den Lastausgleich aufweist, eine Einstellung der Datenstation in einen Zustand durchführt, in dem die kopierte Datei auf der Datenstation nicht geöffnet werden kann.

Die in Anspruch 12 dargelegte Erfindung betrifft ein Dateiverwaltungssystem nach Anspruch 7, dadurch gekennzeichnet, daß die Datei mindestens eine aus einer aus Datendateien und Programmdateien bestehenden Gruppe ausgewählte Datei umfaßt.

Die in Anspruch 13 dargelegte Erfindung betrifft ein Dateiverwaltungssystem nach Anspruch 7, dadurch gekennzeichnet, daß es bei Auftreten von Störungen in einer beliebigen der durch das Netzwerk verbundenen Datenstationen weiterhin folgendes umfaßt:
Backup-Verarbeitungsmittel zur Bezugnahme auf den Meta-Index und Kopieren der in der gestörten Datenstation gespeicherten Informationsdatei von einer anderen Datenstation ohne Störung, wodurch eine Backup-Verarbeitung durchgeführt wird.

### Kurzerklärung der Zeichnungen

Fig. 1 ist ein Konzeptschaubild einer Ausführung gemäß der vorliegenden Erfindung.

Fig. 2 ist ein Blockschaubild, das die Zusammensetzung des Dateicontrollers darstellt.

Fig. 3 ist ein erklärendes Schaubild, das eine Anzeige darstellt, bei der "Material 1" gespeichert ist.

Fig. 4 ist ein erklärendes Schaubild, das die Speicherung nach der Dateiaktualisierung darstellt.

Fig. 5 ist ein erklärendes Schaubild, das eine Anzeige der Aktualisierung des Meta-Index darstellt.

Fig. 6 ist ein erklärendes Schaubild, das den Speicherzustand darstellt.

Fig. 7 ist ein erklärendes Schaubild, das die Häufigkeitstabelle darstellt.

Fig. 8 ist ein erklärendes Schaubild, das das Beschleunigungsprinzip darstellt.

### Bester Modus zur Ausführung der Erfindung

Es folgt eine detaillierte Erklärung einer Ausführung eines Dateiverwaltungsverfahrens und -systems gemäß der vorliegenden Erfindung unter Bezugnahme auf die Zeichnungen.

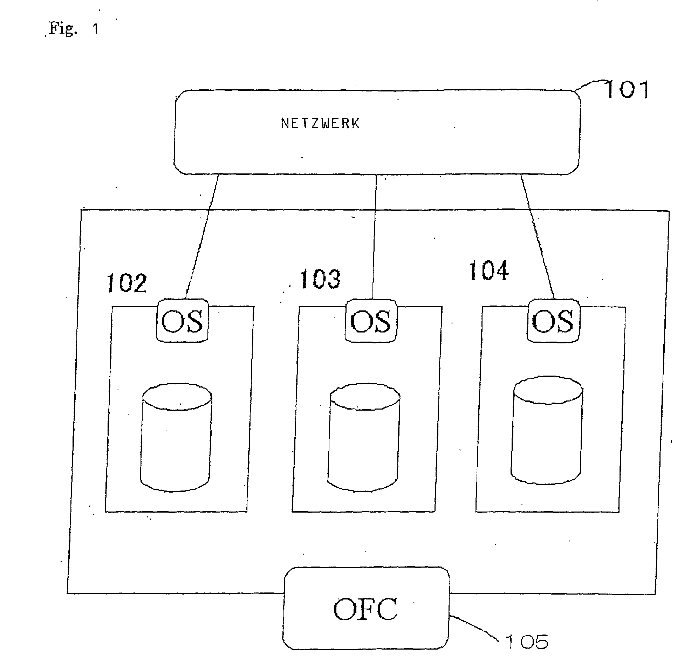

Fig. 1 ist ein Konzeptschaubild einer Ausführung gemäß der vorliegenden Erfindung. Die mittels eines Netzwerkes verbundenen Datenstationen 102, 103, 104 stehen jeweils unter der Kontrolle eines jeden Betriebssystems/Operating System (nachfolgend als OS bezeichnet) Eine mit einem Dateicontroller/file controller 105 (nachfolgend als OFC bezeichnet) ausgestattete Datenstation bewirkt eine Verkapselung dieser drei OS zu einem Ganzen. Eine in der Datenstation gespeicherte beliebige Datei kann von einem Benutzer über jede beliebige Datenstation nur dann geöffnet werden, wenn dieser Zugriff über den Dateicontroller erfolgt.

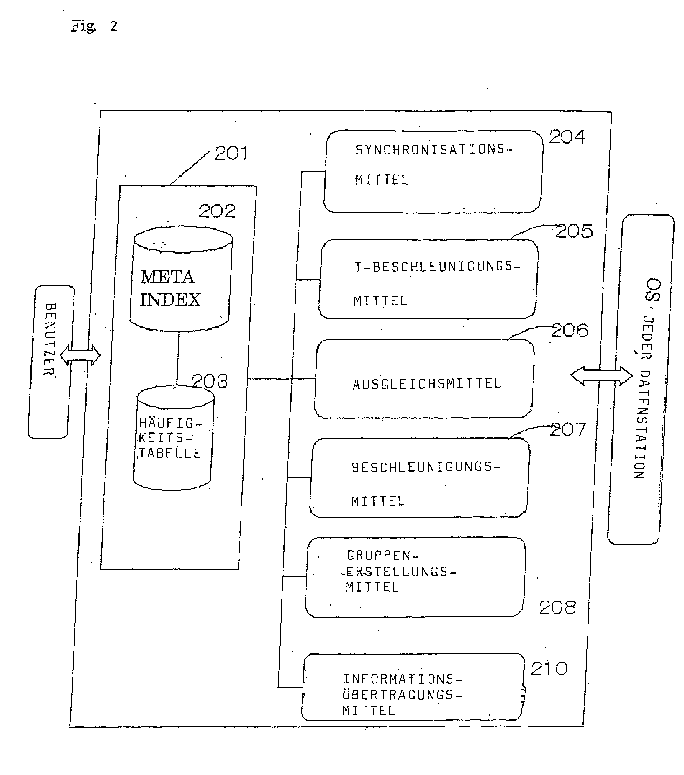

Fig. 2 ist ein Blockschaubild, das die Zusammensetzung des Dateicontrollers darstellt. Das Bezugszeichen 201 bezeichnet eine Meta-Index-Datenbank DB und besteht aus einem Meta-Datenindex oder einem Meta-Index-Speicherteil 202 und einer Häufigkeitstabelle 203. Informationsübertragungsmittel 210, Synchronisationsmittel 204, eigene Datenstationsbeschleunigungsmittel 205, Ausgleichsmittel 206, Beschleunigungsmittel 207 und Gruppenerstellungsmittel 208 kontrollieren die Datei über das OS einer jeden Datenstation unter Bezugnahme auf die Meta-Index-DB.

Es wird die Arbeitsweise von Informationsübertragungsmitteln 210 erklärt. In dem Fall, in dem eine Zugriffsanforderung auf eine Information von einer Datenstation von einem Benutzer über das Netzwerk gestellt wird, bezieht sich das Informationsübertragungsmittel 210 in der einen Datenstation auf den Meta-Index in dem Meta-Index-Speicherteil 202 seines Dateicontrollers. Dann wird die Datei auf eine der beiden folgenden Arten geöffnet und die Informationen über die geöffnete Datei über das Netzwerk 101 an den Benutzer übertragen. Die Art des Öffnens der Datei ist wie folgt: (i) wenn die Datei, in der die Informationen gespeichert sind, in der einen Datenstation vorhanden ist, Öffnen der Datei in der eigenen Datenstation, was vor allen anderen Vorgängen erfolgt bzw. unter Bezugnahme auf die anderen Vorgänge, (ii) wenn die Datei, in der die Informationen gespeichert sind, nicht in der einen Datenstation vorhanden ist, besteht die Art des Öffnens der Datei im
a) Kopieren der Datei einer anderen Datenstation auf die eine Datenstation, Schreiben von Speicherplatzinformationen in den Meta-Index des Dateicontrollers in der einen Datenstation und in eine andere betroffene Datenstation/andere betroffene Datenstationen, und Öffnen der kopierten Datei,
b) Öffnen der Datei in einer anderen Datenstation und Übertragen der Informationen der geöffneten Datei an den Benutzer der einen Datenstation über das Netzwerk, oder
c) Übertragen der Datei einer anderen Datenstation zu der einen Datenstation, Neuschreibung der Speicherplatzinformationen des Meta-Index und Öffnen der übertragenen Datei.

Im Fall von a) sind die betroffenen Informationen in beiden Speichern in einer anderen Datenstation, von der sie kopiert sind, und in der einen Datenstation gespeichert. Da sich die Last der Datenstation, die diese Informationen speichert, erhöht, werden in diesem Fall diese Speicherplatzinformationen in den Meta-Index-Speicherteil des Dateicontrollers seiner eigenen und der anderen betroffenen Datenstation(en) geschrieben.

Im Fall von b) wird die Datei einer anderen Datenstation ohne Kopieren in den Speicher der eigenen Datenstation geöffnet, und die Informationen werden an den oben erwähnten Benutzer übertragen. Wenn z.B. Zugriffsanforderungen auf die Informationen fünf Mal gestellt werden, kann eine Anwendung der später beschriebenen Punkte a) oder c) vorgeschrieben werden.

In dem Fall von c) ist die Datei in einer anderen Datenstation nicht mehr vorhanden, da sie zu der einen Datenstation übertragen wurde. Da die diese Informationen speichernde Datenstation verändert wird, werden diese Speicherplatzinformationen in den Meta-Index des Dateicontrollers in der eigenen Datenstation geschrieben. Andererseits werden diese Speicherplatzinformationen von dem Meta-Index-Speicherteil des Dateicontrollers in der/den anderen Datenstation(en) gelöscht.

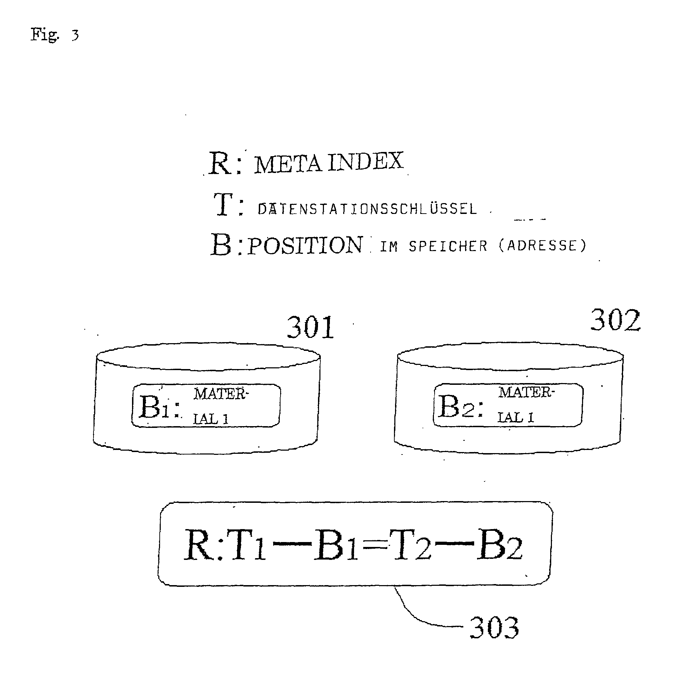

Es wird die Arbeitsweise des Synchronisationsmittels 204 erklärt. Fig. 3 stellt eine Anzeige dar, bei der "MATERIAL 1" dieselben Informationen darstellt, die in einer Datenstation 1 von 301 und einer Datenstation 2 von 302 gespeichert sind. "MATERIAL 1" ist in einer Adresse B1 der Datenstation 1, und eine Adresse B2 ist in der Datenstation 2 gespeichert. Bei diesen Adressen handelt es sich um die von dem OS (Operation System/Betriebssystem) einer jeden Datenstation vergebenen Adressen in dem Speicher. Hierbei kann ein Meta-Index R des Materials 1 so ausgedrückt sein, wie mit Bezugszeichen 303 dargestellt. Bei T1 und T2 handelt es sich um Datenstationsschlüssel zu der Datenstation 1 und der Datenstation 2.

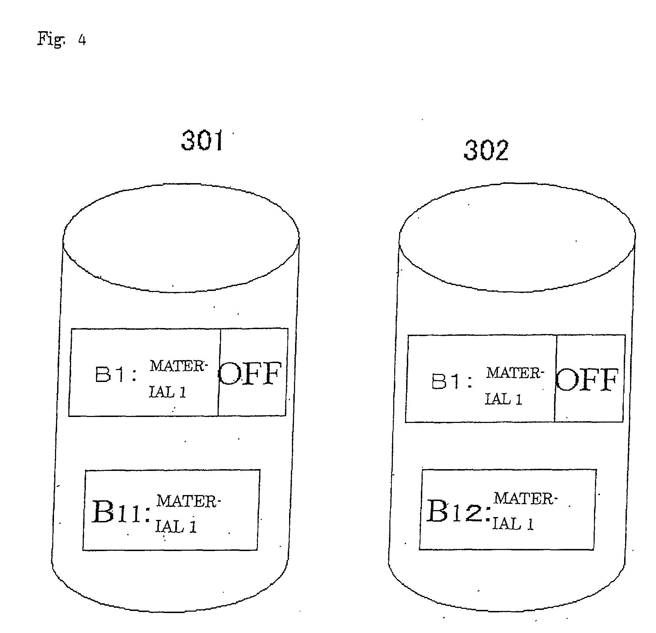

Wenn zu diesem Zeitpunkt die Datei von T1-B1 aktualisiert und die Zugriffsanforderung von einem Benutzer von Datenstation 1 an "MATERIAL 1" gestellt wird, aktualisiert der Dateicontroller die Datei des in R1 (Meta-Index von "MATERIAL 1" in der Datenstation 1) registrierten T2-B2 unter Bezugnahme auf R1. Die Adresse der zu diesem Zeitpunkt aktualisierten Datei wird registriert und das Abwesenheitsbit (OFF) wird eingerichtet und in bezug auf die alte Datei nicht berücksichtigt. Fig. 4 stellt die aktualisierte Datei und die alte Datei als im Zustand OFF befindlich dar. Daher kann die Synchronisation von zwei oder mehr Dateien, die in der verteilten Umgebung vorhanden sind, durchgeführt werden.

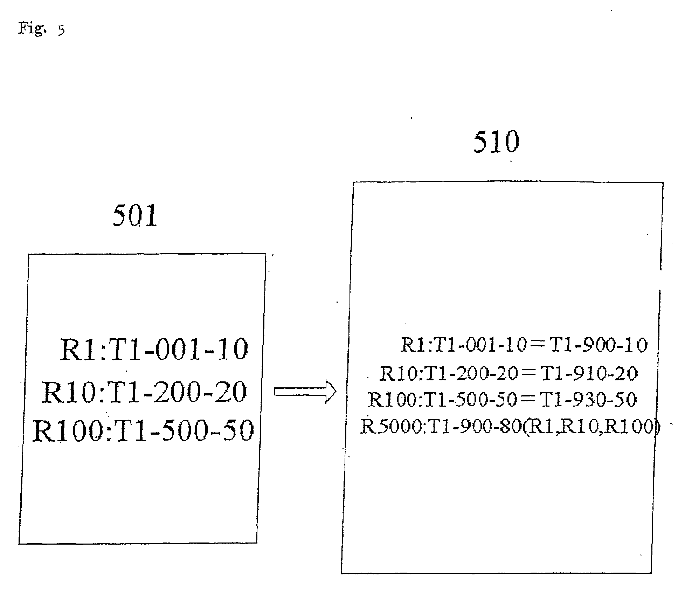

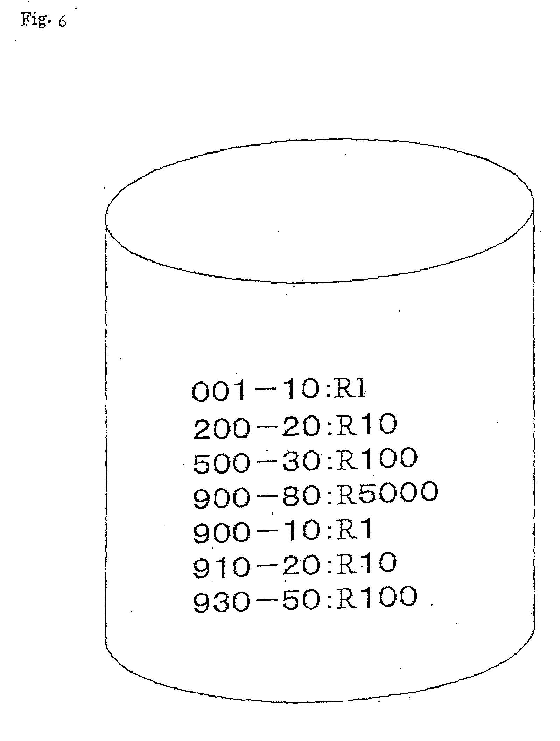

Danach wird das Beschleunigungsmittel 205 der eigenen Datenstation erklärt. Ein Bezugszeichen 501 von Fig. 5 ist ein Meta-Index von in der Datenstation 1 gespeicherten Informationen. Die Informationen R1, R10 und R100 sind in Datenstationsschlüsseln und Adressen registriert (Adressennummern und -größen im Speicher). Wenn hierbei eine Zwischenspeicherdatei R5000 der Größe 80 für eine Adresse T1-900 erstellt wird, wird der Speicher wie in Fig. 6 dargestellt, während der Meta-Index als 510 aktualisiert wird. Die Beschleunigung in der eigenen Datenstation kann durch diese Verfahrensweise erreicht werden. Wenn darüber hinaus ein beliebiges der Elemente R1, R2 und R3 aktualisiert wird, können sie durch Bezugnahme auf die Meta-Indexdaten ohne Widerspruch synchronisiert werden.

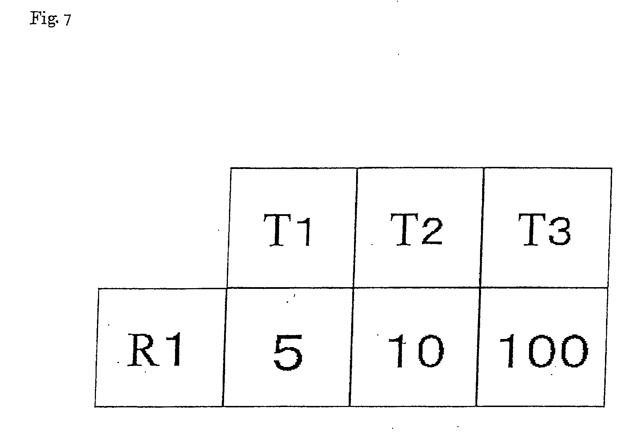

Das Ausgleichsmittel 206 wird erklärt. Die Häufigkeit, wie oft die Zugriffsanforderungen von einer spezifischen Datenstation in bezug auf die jeweiligen Informationen (Rk) gestellt werden, wird in den Häufigkeitstabellen 203 gespeichert. In bezug auf die in Fig. 7 dargestellte Häufigkeitstabelle wird die Zugriffshäufigkeit jeder Datenstation (T1, T2, T3) gezählt, wenn es eine Zugriffsanforderung auf die Informationen R1 gibt. Die Informationen R1 sind in allen Datenstationen vorhanden, und wenn die Last von R1 ein Problem ist, wird die Datei von Datenstation 1, bei der die Benutzungshäufigkeit am kleinsten ist, gelöscht. Darüber hinaus wird sie auf die Datenstation 3 mit der höchsten Häufigkeit bewegt, wenn die Informationssubstanz nur in der Datenstation 1 vorhanden ist. Der Lastausgleich kann unter Bezugnahme auf die Häufigkeitstabelle wie folgt durchgeführt werden.

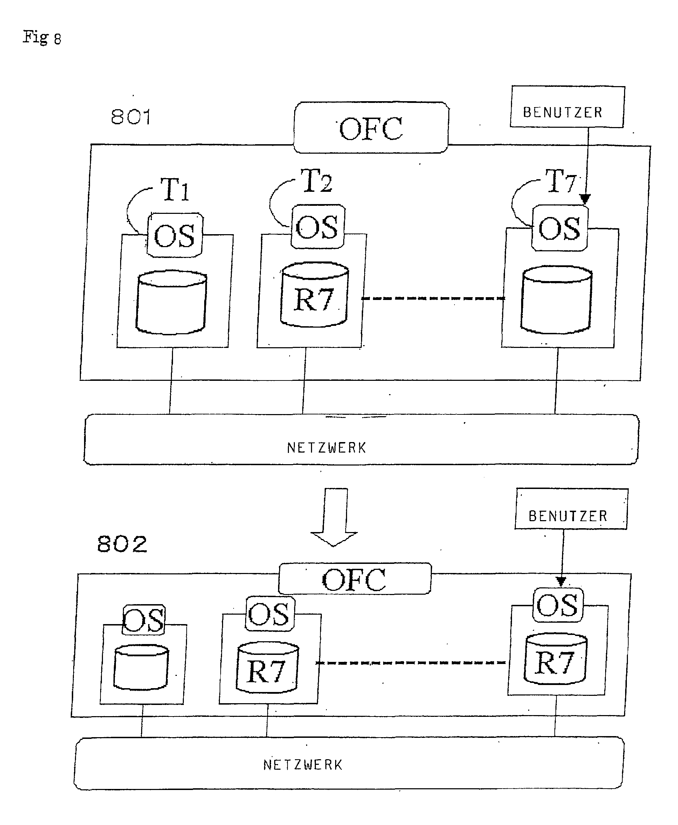

Das Beschleunigungsmittel 207 wird erklärt. In dem Fall, in dem eine Zugriffsanforderung auf die Informationen R7 von einem Benutzer in Datenstation T7 gestellt wird, erfolgt eine Bezugnahme auf den Meta-Index. Immer dann, wenn die diese Informationen speichernde Datei in der eigenen Datenstation vorhanden ist, wird die Datei in der eigenen Datenstation immer geöffnet. In dem Fall ohne die Datei (801 in Fig. 8) wird die Datei von einer anderen Datenstation in die eigene Datenstation kopiert, und die Speicherplatzinformationen werden in den Meta-Index geschrieben. Ein Bezugszeichen 802 von Fig. 8 stellt den Zustand dar, nachdem die Datei kopiert ist. Daher kann die Beschleunigung durch Zugriff auf die Datei erreicht werden, die auf die eigene Datenstation kopiert ist.

Das Gruppenerstellungsmittel 208 wird erklärt. Eine Verarbeitung, durch die eine Ziel-Datenstation (Tn) für die Dateikontrolle dieser Erfindung neu hinzugefügt wird, wird hier durchgeführt. Der Meta-Index von Tn wird mit den Meta-Indexdaten der Datenstationen vermischt, die bereits in eine Gruppe umgewandelt wurden, und die erstellten Daten werden in jede Datenstation der Gruppe als Meta-Indexdaten einer neuen Gruppe kopiert. Durch diese Verfahrensweise kann der Benutzer so handeln, bzw. die Datei so behandeln, als wenn sie auf der eigenen Datenstation vorhanden wäre.

Wenn darüber hinaus die Bezugsberechtigung(en) für jede Datenstation in der Meta-Index-Datenbank registriert ist/sind, ist es möglich, daß die Datenstation, die über keine Bezugsberechtigung verfügt, keine Bezugnahme auf die in ihr selbst gespeicherte Datei vornehmen kann, selbst wenn die Datei der Informationen zwecks Lastausgleich in die Datenstation kopiert wird, und somit kann die Sicherheit des Netzwerkes aufrechterhalten werden.

Wenn weiterhin eine Störung in einer beliebigen der durch das Netzwerk verbundenen Datenstationen auftritt, werden die Speicherplatzinformationen über die in der gestörten Datenstation gespeicherte Datei durch Bezugnahme auf den Meta-Index aufgerufen. Danach wird die Backup-Verarbeitung mit der Kopie von der anderen Datenstation ohne jedes Problem durchgeführt. Durch diese Verfahrensweise kann der Benutzer eine sichere verteilte Umgebung aufrechterhalten, ohne eine spezielle Backup-Verarbeitung oder die Sicherheitsverarbeitung in Betracht ziehen zu müssen.

Wie in der obigen Erklärung beschrieben, kann der Benutzer gemäß der vorliegenden Erfindung die in der verteilten Umgebung des Netzwerkes erhaltene Datei so behandeln, als wenn sie in der eigenen Datenstation vorhanden wäre. Darüber hinaus kann ein Problem, daß sich Last auf eine spezifische Datenstation konzentriert, ein Problem der Synchronisation bei der Dateiaktualisierung und ein Kostenerhöhungsproblem, weil der Zugriff auf eine andere Datenstation erfolgt, umgangen werden.

## Patentansprüche

1. Dateiverwaltungsverfahren in verteilter Umgebung, wobei eine Mehrzahl von Datenstationen (102,103,104) mittels eines Netzwerkes (101) verbunden ist und Informationen jeweils in dem Speicher einiger verteilter Datenstationen (102,103,104) aufgezeichnet sind, wobei das Verfahren folgende Schritte umfaßt:
1) Einrichtung eines Dateicontrollers (105) in der einzelnen Datenstation (102,103,104), der Dateien der eigenen Datenstation (102,103,104) verwaltet und den Informationsaustausch mit dem Netzwerk (101) kontrolliert,
2) Erzeugung eines Meta-Index (201) zur Erkennung einer Information in bezug auf die Informationen innerhalb des Netzwerkes (101) und Registrierung von Speicherplatzinformationen eines Originals und seiner kopierten Datei(en), wovon jede die Information speichert, in einem Meta-Index-Speicherteil (202) des Dateicontrollers (105) in jeder Datenstation (102,103,104), in dem die Information aufgezeichnet ist,
3) in dem Fall, in dem eine Zugriffsanforderung auf eine Information von einer Datenstation (102,103,104) von einem Benutzer über das Netzwerk (101) unter Bezugnahme auf den Meta-Index (201) in dem Meta-Index-Speicherteil (202) des Dateicontrollers (105) in der einen Datenstation (102,103,104) gestellt wird, und
(i) wenn die Datei, in der die Informationen gespeichert sind, in der einen Datenstation (102,103,104) vorhanden ist, Öffnen der Datei in der Datenstation (102,103,104),
(ii) wenn die Datei, in der die Informationen gespeichert sind, nicht in der einen Datenstation (102,103,104) vorhanden ist,
a> Kopieren der Datei einer anderen Datenstation (102,103,104) auf die eine Datenstation (102,103,104), Schreiben von Speicherplatzinformationen in den Meta-Index (201) des Dateicontrollers (105) in der einen Datenstation (102,103,104) und in eine andere betroffene Datenstation (102,103,104)/andere betroffene Datenstationen (102,103,104), und Öffnen der kopierten Datei,
b> Öffnen der Datei in einer anderen Datenstation (102,103,104) und Übertragen der Informationen der geöffneten Datei an den Benutzer der einen Datenstation (102,103,104) über das Netzwerk (101), oder
d>Übertragen der Datei einer anderen Datenstation (102,103,104) zu der einen Datenstation (102,103,104), Neuschreibung der Speicherplatzinformationen des Meta-Index (201) und Öffnen der übertragenen Datei, und,
4) in dem Fall, in dem eine Veränderung in der Datei in einer Datenstation (102,103,104) aufgezeichnet ist, Bezugnahme auf den in dem Meta-Index-Speicherteil (202) der einen Datenstation (102,103,104) aufgezeichneten Meta-Index (201) und synchronisierende Aktualisierung der Datei in der anderen Datenstation (102,103,104)/allen anderen Datenstationen (102,103,104), deren Speicherplatz/plätze aufgezeichnet ist/sind.

2. Dateiverwaltungsverfahren nach Anspruch 1,
**dadurch gekennzeichnet, daß**
die Speicherplatzinformationen aus einem Datenstationsschlüssel bestehen, der die Datenstation (102,103,104) spezifiziert, die die Datei speichert sowie eine Adresse, an der die von dem Dateicontroller in der Datenstation (102,103,104) kontrollierte Position in dem Speicher spezifiziert wird.

3. Dateiverwaltungsverfahren nach Anspruch 1,
**dadurch gekennzeichnet, daß**
es weiterhin folgende Schritte umfaßt, wobei der Benutzer der einen Datenstation (102,103,104) eine Mehrzahl der getrennt in dem Speicher der eigenen Datenstation (102,103,104) gespeicherten Dateien gleichzeitig nutzen will,
1) Herstellung einer Zwischenspeicherdatei in einem neuen Bereich in dem Speicher der eigenen Datenstation (102,103,104) durch kontinuierliches Kopieren der Dateien mit Registrierung von Speicherplatzinformationen der Zwischenspeicherdatei in dem Meta-Index (201) einer jeden Datei,
2) Bezugnahme auf den Meta-Index (201) und Öffnen der Zwischenspeicherdatei, wenn danach eine Zugriffsanforderung auf eine der Dateien durch den Benutzer der einen Datenstation (102,103,104) gestellt wird.

4. Dateiverwaltungsverfahren nach Anspruch 1,
**dadurch gekennzeichnet, daß**
es weiterhin folgende Schritte umfaßt:
Bereitstellung des Meta-Index-Speicherteils einer jeden Datenstation (102,103,104) mit einer Tabelle, die die bei jedem Speicherplatz in demselben registrierte Zugriffshäufigkeit zählt, und
Kopieren, Übertragen oder Löschen der Datei in Abhängigkeit von dem Lastausgleich zwischen den Datenstationen (102,103,104), wenn notwendig.

5. Dateiverwaltungsverfahren nach Anspruch 1,
**dadurch gekennzeichnet, daß**
es weiterhin folgende Schritte umfaßt:
Bereitstellung des Dateicontrollers (105) mit einer Liste, die die Bezugsberechtigung für jede Datenstation (102,103,104) beschreibt, und
in dem Fall, in dem die Datei auf eine Datenstation (102,103,104) kopiert wird, die keine Bezugsberechtigung entsprechend der Notwendigkeit in bezug auf den Lastausgleich aufweist, Einstellung der Datenstation (102,103,104) in einen Zustand, in dem die kopierte Datei auf der Datenstation (102,103,104) nicht geöffnet werden kann.

6. Dateiverwaltungsverfahren nach Anspruch 1,
**dadurch gekennzeichnet, daß**
die Datei mindestens eine aus einer aus Datendateien und Programmdateien bestehenden Gruppe ausgewählte Datei umfaßt.

7. Dateiverwaltungsverfahren nach Anspruch 1,
**dadurch gekennzeichnet, daß**
es bei Auftreten von Störungen in einer beliebigen der durch das Netzwerk (101) verbundenen Datenstationen (102,103,104) weiterhin die folgenden Schritte umfaßt:
Bezugnahme auf den Meta-Index (201) und,
Kopieren der in der gestörten Datenstation (102,103,104) gespeicherten Informationsdatei von einer anderen Datenstation (102,103,104) ohne Störung, wodurch eine Backup-Verarbeitung durchgeführt wird.

8. Dateiverwaltungsverfahren in verteilter Umgebung, wobei eine Mehrzahl von Datenstationen (102,103,104) jeweils mittels eines Netzwerkes (101) verbunden ist und Informationen jeweils in dem Speicher einiger verteilter Datenstationen (102,103,104) aufgezeichnet sind, wobei jede Datenstation (102,103,104) einen Dateicontroller aufweist, der Dateien der eigenen Datenstation (102,103,104) verwaltet und den Informationsaustausch mit dem Netzwerk (101) kontrolliert, und in der einzelnen Datenstation (102,103,104) eingerichtet wird, wobei der Dateicontroller folgendes umfaßt:
1) Ein Meta-Index-Speicherteil (202) zur Registrierung eines Meta-Index (201) zur Erkennung einer Information in bezug auf Informationen innerhalb des Netzwerkes (101) und zur Registrierung von Speicherplatzinformationen eines Originals und seiner kopierten Datei(en), wovon jede die Information speichert,
2) ein Informationsübertragungsmittel (210) für den Fall, in dem eine Zugriffsanforderung auf eine Information von einer Datenstation (102,103,104) von einem Benutzer über das Netzwerk (101) unter Bezugnahme auf den Meta-Index (201) in dem Meta-Index-Speicherteil (202) des Dateicontrollers (105) in der einen Datenstation (102,103,104) gestellt wird, und
(i) wenn die Datei, in der die Informationen gespeichert sind, in der einen Datenstation (102,103,104) vorhanden ist, Öffnen der Datei in der Datenstation (102,103,104),
(ii)wenn die Datei, in der die Informationen gespeichert sind, nicht in der einen Datenstation (102,103,104) vorhanden ist,
a> Kopieren der Datei einer anderen Datenstation (102,103,104) auf die eine Datenstation (102,103,104), Schreiben von Speicherplatzinformationen in den Meta-Index (201) des Dateicontrollers (105) in der einen Datenstation (102,103,104) und in eine andere betroffene Datenstation (102,103,104)/andere betroffene Datenstationen (102,103,104), und Öffnen der kopierten Datei,
b> Öffnen der Datei in einer anderen Datenstation (102,103,104) und Übertragen der Informationen der geöffneten Datei an den Benutzer der einen Datenstation über das Netzwerk, oder
c> Übertragen der Datei einer anderen Datenstation (102,103,104) zu der einen Datenstation, Neuschreibung der Speicherplatzinformationen des Meta-Index und Öffnen der übertragenen Datei, und,
3) Synchronisationsmittel (204) zur Bezugnahme auf den in dem Meta-Index-Speicherteil (202) der einen Datenstation (102,103,104) aufgezeichneten Meta-Index (201) und synchronisierende Aktualisierung der Datei in der anderen Datenstation (102,103,104)/allen anderen Datenstationen (102,103,104), deren Speicherplatz/plätze aufgezeichnet ist/sind, in dem Fall, in dem eine Veränderung in der Datei in einer Datenstation (102,103,104) aufgezeichnet ist.

9. Dateiverwaltungssystem nach Anspruch 8,
**dadurch gekennzeichnet, daß**
es weiterhin folgendes umfaßt:
Ein Gruppeneinrichtungsmittel zum Einrichten einer Gruppe um zu veranlassen, daß die zu der Gruppe gehörenden Datenstationen (102,103,104) den Meta-Index (201) gemeinsam besitzen.

10. Dateiverwaltungssystem nach Anspruch 8,
**dadurch gekennzeichnet, daß**
die Speicherplatzinformationen aus einem Datenstationsschlüssel bestehen, der die Datenstation (102,103,104) spezifiziert, die die Datei speichert sowie eine Adresse, an der die von dem Dateicontroller in der Datenstation (102,103,104) kontrollierte Position in dem Speicher spezifiziert wird.

11. Dateiverwaltungssystem nach Anspruch 8,
**dadurch gekennzeichnet, daß**
es weiterhin folgendes umfaßt:
Beschleunigungsmittel (205, 207, 208), wenn der Benutzer der einen Datenstation (102,103,104) eine Mehrzahl der getrennt in dem Speicher seiner Datenstation (102,103,104) gespeicherten Dateien gleichzeitig nutzen will,
1) Herstellung einer Zwischenspeicherdatei in einem neuen Bereich in dem Speicher der eigenen Datenstation (102,103,104) durch kontinuierliches Kopieren der Dateien mit Registrierung von Speicherplatzinformationen der Zwischenspeicherdatei in dem Meta-Index (201) einer jeden Datei, und
2) Bezugnahme auf den Meta-Index (201) und Öffnen der Zwischenspeicherdatei, wenn danach eine Zugriffsanforderung auf eine der Dateien durch den Benutzer der einen Datenstation (102,103,104) gestellt wird.

12. Dateiverwaltungssystem nach Anspruch 8,
**dadurch gekennzeichnet, daß**
der Dateicontroller von jeder Datenstation (102,103,104) folgendes umfaßt:
Eine Tabelle, die die Zugriffshäufigkeit auf den darin registrierten Speicherplatz zählt, und
Ausgleichsmittel zum Kopieren, Übertragen oder Löschen der Datei in Abhängigkeit von dem Lastausgleich zwischen den Datenstationen (102,103,104), wenn notwendig.

13. Dateiverwaltungssystem nach Anspruch 12,
**dadurch gekennzeichnet, daß**
der Dateicontroller weiterhin folgendes umfaßt:
Eine Liste, die die Bezugsberechtigung für jede Datenstation (102,103,104) beschreibt, und
das Ausgleichsmittel (206) in dem Fall, in dem die Datei auf eine Datenstation (102,103,104) kopiert wird, die keine Bezugsberechtigung entsprechend der Notwendigkeit in bezug auf den Lastausgleich aufweist, eine Einstellung der Datenstation (102,103,104) in einen Zustand durchführt, in dem die kopierte Datei auf der Datenstation (102,103,104) nicht geöffnet werden kann.

14. Dateiverwaltungssystem nach Anspruch 8,
**dadurch gekennzeichnet, daß**
die Datei mindestens eine aus einer aus Datendateien und Programmdateien bestehenden Gruppe ausgewählte Datei umfaßt.

15. Dateiverwaltungssystem nach Anspruch 8,
**dadurch gekennzeichnet, daß**
es bei Auftreten von Störungen in einer beliebigen der durch das Netzwerk (101) verbundenen Datenstationen (102,103,104) weiterhin folgendes umfaßt:
Backup-Verarbeitungsmittel zur Bezugnahme auf den Meta-Index (201) und Kopieren der in der gestörten Datenstation (102,103,104) gespeicherten Informationsdatei von einer anderen Datenstation (102,103,104) ohne Störung, wodurch eine Backup-Verarbeitung durchgeführt wird.
